(19) Europäisches Patentamt
European Patent Office
Office européen des brevets

(11) Veröffentlichungsnummer: **0 001 965**
**B1**

# (12) EUROPÄISCHE PATENTSCHRIFT

(45) Veröffentlichungstag der Patentschrift: **15.12.82**

(21) Anmeldenummer: **78100608.5**

(22) Anmeldetag: **07.08.78**

(51) Int. Cl.³: **C 08 G 18/75,**
C 08 G 18/14,
C 08 G 18/20,
C 08 G 18/24, C 08 J 9/34

## (54) Verfahren zur Herstellung von Formschaumstoffen.

(30) Priorität: **20.08.77 DE 2737670**

(43) Veröffentlichungstag der Anmeldung:
**30.05.79 Patentblatt 79/11**

(45) Bekanntmachung des Hinweises auf die Patenterteilung:
**15.12.82 Patentblatt 82/50**

(84) Benannte Vertragsstaaten:
**BE DE FR GB NL**

(56) Entgegenhaltungen:
**DE - A - 1 595 281**
**DE - A - 1 745 418**
**DE - A - 1 804 362**
**DE - A - 1 966 683**
**FR - A - 2 343 766**
**US - A - 4 017 428**

(73) Patentinhaber: **BAYER AG**
**Zentralbereich Patente, Marken und Lizenzen**
**D-5090 Leverkusen 1, Bayerwerk (DE)**

(72) Erfinder: **Kleimann, Helmut, Dr.**
**Mettlacher Strasse 6**
**D-5090 Leverkusen (DE)**
Erfinder: **Meyborg, Holger, Dr.**
**Bergstrasse 92**
**D-5068 Odenthal-Gloebusch (DE)**
Erfinder: **Lienert, Hans-Jürgen, Dr.**
**Jakob-Boehme-Strasse 8**
**D-5000 Köln (DE)**
Erfinder: **Grögler, Gerhard, Dr.**
**von-Diergardt-Strasse 46**
**D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 001 965 B1

# Verfahren zur Herstellung von Formschaumstoffen

Die vorliegende Erfindung betrifft ein neues Verfahren zur Herstellung von witterungsbeständigen Formschaumstoffen einer hohen Formbeständigkeit in der Wärme.

Schaumstoffe auf Basis von Polyisocyanaten, z.B. Polyurethanschaumstoffe mit einer dichten Außenhaut und einem zelligen Kern, wie sie gemäß der Methode der Formverschäumung (DAS 1 196 864 und 1 694 138 und französische Patentschrift 1 559 325) erhalten werden, eignen sich vorzüglich für die Serienherstellung von Leichtbaukonstruktionen, z.B. für den Möbel-, Fahrzeug- und Hausbau, bzw. elastischen Formteilen, wie Kissen, Stoßdämpfer, Schuhsohlen.

Die Polyurethan-Formkörper werden hergestellt, indem das schaumfähige Reaktionsgemisch, das aus Polyisocyanaten, Verbindungen, die mindestens zwei mit Isocyanaten reagierende Wasserstoffatome tragen, und Zusatzstoffen besteht, in geschlossene, temperierbare Formwerkzeuge gefüllt wird, in denen es aufschäumt und — stark verdichtet — erstarrt. Der Kunststoff füllt das Werkzeug exakt aus und bildet die Werkzeuginnenflächen genau ab.

Die bisher im Markt angebotenen Rohstoffe bzw. die bislang in der Praxis ausgeführten Verfahren zur Herstellung harter Polyurethanschaumstoffe basieren auf der Vernetzung von aromatischen Polyisocyanaten mit Polyäther- oder Polyester-Polyolen. Derartige Formkörper weisen ein hohes mechanisches Werteniveau auf, wie E-Modul, Wärmestandfestigkeit, Schlagzähigkeit, das sie für viele Anwendungen geeignet macht, wie Möbelteile, technische Gehäuse, Fensterprofile und ähnliches. Ein Nachteil all dieser Formteile ist es, daß sie durch Bewitterung vergilben und zusätzlich in der Oberfläche durch chemischen Abbau aufrauhen, so daß die Formteile für erhöhte Ansprüche mit einer schützenden Lackschicht versehen werden müssen.

Es ist nun bekannt, daß Polyurethane, insbesondere Polyurethanlacke, auf Basis aliphatischer oder alicyclischer Isocyanate eine derartige Vergilbungstendenz nicht zeigen. Der naheliegende Gedanke, diesen Erfahrungen entsprechend auch bei der Herstellung von Polyurethanschaumstoffen, insbesondere von harten Polyurethanformschaumstoffen mit integraler Dichteverteilung aliphatische oder cycloaliphatische Polyisocyanate einzusetzen, scheiterte bislang u.a. an dem mangelhaften mechanischen Werteniveau derart hergesteller harter Formschaumstoffe. Insbesondere die Formbeständigkeit in der Wärme nach DIN 53 432 von harten Formschaumstoffen auf Basis der klassischen aliphatischen Polyisocyanate wie z.B. Hexamethylendiisocyanat oder dem diesem Diisocyanat entsprechenden Biuretgruppen aufweisenden Polyisocyanat entsprach nicht den diesbezüglichen Erfordernissen der Praxis.

Es war somit Aufgabe der vorliegenden Erfindung, ein neues Verfahren zur Verfügung zu stellen, welches die Herstellung von harten Formschaumstoffen auf Polyurethanbasis gestattet, die nicht mit dem Nachteil einer mangelhaften Witterungsbeständigkeit behaftet sind und die außerdem neben einem guten E-Modul und einer guten Schlagzähigkeit insbesondere eine hohe Formbeständigkeit in der Wärme aufweisen.

Diese Aufgabe konnte erfindungsgemäß mit dem nachstehend näher beschriebenen erfindungsgemäßen Verfahren gelöst werden.

Gegenstand der Erfindung ist ein Verfahren zur Herstellung von Formschaumstoffen auf Polyurethanbasis mit kompakter Oberfläche, zelligem Kern und integraler Dichteverteilung über dem Querschnitt der Formkörper durch Aufschäumen eines schaumfähigen Reaktionsgemisches aus

a) Polyisocyanaten mit einem NCO-Gehalt von 24—32 Gew.-% und einer Viskosität von 80—5000 mPa.s/25°C, die Umsetzungsprodukte von mindestens eine cycloaliphatisch gebundene Isocyanatgruppe und höchstens eine aliphatisch gebundene Isocyanatgruppe aufweisenden (cyclo)-aliphatischen Diisocyanaten des Molekulargewichtsbereichs 166—300 mit unterschüssigen Mengen an organischen Polyhydroxylverbindungen darstellen,

b) Polyhydroxylverbindungen einer (mittleren) OH-Funktionalität von 2,1 bis 5,

c) Aktivatoren und

d) Treibmitteln, sowie gegebenenfalls weiteren mit Isocyanaten reagierenden Verbindungen und weiteren Hilfsmitteln in einer geschlossenen Form unter den Bedingungen der Formverschäumung, dadurch gekennzeichnet, daß man als Aktivatoren c) Kombinationen von Amidingruppierungen oder Imidazolgruppierungen aufweisenden organischen Verbindungen, ausgewählt aus der Gruppe bestehend aus (i) Verbindungen der Formel

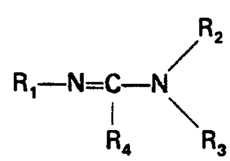

wobei

$R_1$, $R_2$ und $R_3$ gleiche oder verschiedene Reste bedeuten und für Wasserstoff, ein aliphatischer Kohlenwasserstoffrest mit 1 bis 18, vorzugsweise 1 bis 4 Kohlenstoffatomen, ein aromatischer Kohlenwasserstoffrest mit 6 bis 10 Kohlenstoffatomen, vorzugsweise einen Phenylrest, einen araliphatischen Kohlenwasserstoffrest mit 7 bis 10 Kohlenstoffatomen, vorzugsweise einen Benzylrest oder einen cycloaliphatischen Kohlenwasserstoffrest mit 5 bis 7 Kohlenstoffatomen, vorzugsweise ein Cyclohexylrest stehen und

$R_4$ einen Rest wie $R_1$ oder die Gruppierung $-N(R_2)R_3$ darstellt,

(ii) Verbindungen der Formel

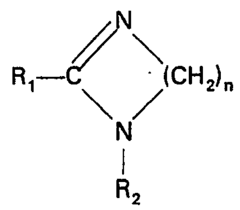

in welcher

$R_1$ und $R_2$ die genannten Bedeutungen haben und in der

n für eine ganze Zahl von 2 bis 4 steht,

(iii) Verbindungen der Formel

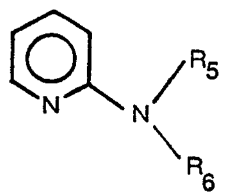

in welcher

$R_5$ und $R_6$ für gleiche oder verschiedene Reste stehen und Wasserstoff oder einen Alkylrest mit 1 bis 4 Kohlenstoffatomen bedeuten und

(iv) Verbindungen der Formel

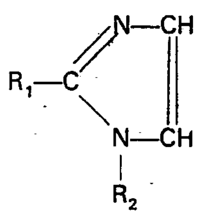

in welcher

$R_1$ und $R_2$ die bereits genannte Bedeutung haben mit organischen Zinnverbindungen verwendet.

Das erfindungsgemäße Verfahren unterscheidet sich vom Verfahren der DE—OS 1 745 418 durch den Umstand, daß gemäß Vorveröffentlichung ausschließlich bicyclische Amidine eingesetzt werden, während erfindungsgemäß ausschließlich offenkettige bzw. monocyclische Amidine zum Einsatz gelangen. Die Amidine der Vorveröffentlichung werden, wie den Ausführungsbeispielen zu entnehmen, vorzugsweise zur Katalyse der Additionsreaktion von aromatischen Polyisocyanaten eingesetzt. Außerdem enthält die Vorveröffentlichung nicht den geringsten Hinweis auf die Herstellung von Formschaumstoffen mit kompakter Oberfläche. Grundsätzlich die gleichen Feststellungen rechtfertigen sich im Hinblick auf die DE—OS 1 595 281. Die gemäß dieser Vorveröffentlichung zum Einsatz gelangenden N-Hydroxyalkyl-substituierten Imidazole unterscheiden sich ebenfalls von den erfindungsgemäß zu verwendenden Katalysatoren; außerdem ist auch dieser Vorveröffentlichung keinerlei Hinweis auf die Herstellung von Formschaumstoffen mit kompakter Oberfläche zu entnehmen.

Beim erfindungsgemäßen Verfahren werden als Polyisocyanat-komponente Lösungen von Urethangruppen aufweisenden Polyisocyanaten auf Basis ausgewählter Diisocyanate in überschüssigen Mengen dieser Diisocyanate, sogenannte "Semipräpolymere" eingesetzt. Diese Semipräpolymere weisen im allgemeinen einen mittleren NCO-Gehalt von 24 bis 32 Gew.-% und eine Viskosität von 80 bis 5000, vorzugsweise 100 bis 2500, mPa.s/25°C auf. Sie werden hergestellt durch Umsetzung von beliebigen organischen Diisocyanaten des Molekulargewichtsbereichs 166—300, welche mindestens eine cycloaliphatisch gebundene Isocyanatgruppe und im übrigen ausschließlich cycloaliphatisch bzw. höchstens eine aliphatisch gebundene Isocyanatgruppen aufweisen mit beliebigen, insbesondere aliphatisch gebundene alkoholische Hydroxylgruppen aufweisenden Polyhydroxylverbindungen der in der Polyurethanchemie an sich bekannten und nachstehend beispielhaft beschriebenen Art im molaren NCO/OH-Verhältnis von 2:1 bis 100:1, vorzugsweise 4:1 bis 16:1, wobei vorzugsweise Art und Mengenverhältnisse der Ausgangsmaterialien zur Herstellung der Semipräpolymeren im Rahmen der gemachten Ausführungen so gewählt werden, daß die Viskosität und der NCO-Gehalt der Semipräpolymeren innerhalb der genannten Bereiche liegt.

Geeignete Diisocyanate zur Herstellung der beim erfindungsgemäßen Verfahren einzusetzenden Semipräpolymere sind z.B. 1,4 - Diiso - cyanatocyclohexan, 2,4 - Diisocyanato - per - hydro - toluol, 4,4' - Diisocyanatodicyclohexyl - methan und 1 - Isocyanato - 3,3,5 - trimethyl - 5 - isocyanatomethyl - cyclohexan (Isophoron - diisocyanat = IPDI). Isophorondiisocyanat ist besonders bevorzugt. Bei der Herstellung der Semipräpolymeren können auch Gemische verschiedener der obigen Definition entsprechenden Diisocyanate eingesetzt werden. Es ist auch möglich, Semipräpolymere einzusetzen, die zunächst unter Verwendung eines Diisocyanats (beispielsweise unter Verwendung von IPDI) hergestellt worden sind, und welche anschließend mit einem anderen Diisocyanat (beispielsweise 4,4' - Diisocyanatodicyclohexylmethan) verschnitten wurden, wobei das molare NCO/OH-Verhältnis bezogen auf die Gesamtmenge der Diisocyanate innerhalb der o.g. Bereiche liegt.

Reaktionspartner für die Semipräpolymeren sind beim erfindungsgemäßen Verfahren beliebige organische Verbindungen mit mindestens 2 gegenüber Isocyanaten reaktionsfähigen Wasserstoffatomen des Molekulargewichtsbereichs 62—10 000. Bei diesen Reaktionspartnern für die Polyisocyanatkomponente handelt es sich vorzugsweise um organische Polyhydroxylverbindungen mit aliphatisch gebundenen Hydroxylgruppen bzw. um Gemische derartiger Polyhydroxylverbindungen eines (mittleren) Molekulargewichts von vorzugsweise 150 bis 4000, wobei einzelne Komponenten eines eventuell zum Einsatz gelangenden Gemischs oft ein unterhalb bzw. oberhalb dieser bevorzugten Molekulargewichtsbereiche, innerhalb des o.g. breiten Bereichs von 62 bis 10 000 liegenden Molekulargewicht aufweisen. Die zum Einsatz gelangenden Hydroxylverbindungen weisen eine (mittlere) OH-Funktionalität von 2,1 bis 5, auf. Besonder bevorzugt werden die entsprechenden Polyhydroxypolyäther und Polyhydroxypolyester, gegebenenfalls im Gemisch mit den den gemachten Ausführungen entsprechenden einfachen, nachstehend beispielhaft genannten, Alkanpolyolen eingesetzt.

Auch der Einsatz von Polythioäther, Polyacetalen, Polycarbonaten oder Polyesteramiden mit gegenüber Isocyanatgruppen reaktionsfähigen Gruppen mit einem innerhalb der genannten Bereiche liegenden Molekulargewicht ist möglich.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrachlorphthalsäureanhydrid, Tetrahydrophthalsäureanhydrid, Hexahydrophthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester, Terephthalsäure - bis - glykolester. Als mehrwertige Alkohole kommen z.B. Äthylenglykol, Propylenglykol - (1,2) und - (1,3), Butylenglykol - (1,4) und - (2,3), Hexandiol - (1,6), Octandiol - (1,8), Neopentylglykol, Cyclohexandimethanol (1,4 - Bis - hydroxymethylcyclohexan), 2 - Methyl - 1,3 - propandiol, Glycerin, Trimethylolpropan, Hexantriol - (1,2,6), Butantriol - (1,2,4), Tri - methyloläthan, Pentaerythrit, Chinit, Mannit und Sorbit, Methylglykosid, ferner Diäthylenglykol, Triäthylenglykol, Tetraäthylenglykol, Polyäthylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. ε-Caprolacton oder Hydroxycarbonsäuren, z.B. ω-Hydroxycapronsäure, sind einsetzbar. Die o.g. niedermolekularen mehrwertigen Alkohole können auch als solche eingesetzt werden.

Auch die bevorzugt erfindungsgemäß in Frage kommenden, mindestens zwei, in der Regel zwei bis acht, vorzugsweise zwei bis vier, insbesondere zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Alkohole oder Amine, z.B. Wasser, Äthylenglykol, Propylenglykol-(1,3) oder -(1,2), Trimethylolpropan, 4,4'-Dihydroxydiphenylpropan, Anilin, Ammoniak, Äthanolamin, Äthylendiamin hergestellt. Auch Sucrosepolyäther, wie sie z.B. in den deutschen Auslegeschriften 1 176 358 und 1 064 938 beschrieben werden, kommen erfindungsgemäß in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch durch Vinylpolymerisate modifizierte Polyäther, wie sie z.B. durch Polymerisation von Styrol, Acrylnitril in Gegenwart von Polyäthern entstehen (amerikanische Patentschriften 3 383 351, 3 304 273, 3 523 093, 3 110 695, deutsche Patentschrift 1 152 536), sind ebenfalls geeignet, ebenso OH-Gruppen aufweisende Polybutadiene.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischäther, Polythioätherester, Polythioätheresteramide.

Als Polyacetale kommen z.B. die aus Glykolen, wie Diäthylenglykol, Triäthylenglykol, 4,4' - Dioxäthoxy - diphenyldimethylmethan, Hexandiol und Formaldehyd herstellbaren Verbindungen in Frage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol mit

Diarylcarbonaten, z.B. diphenylcarbonat oder Phosgen, hergestellt werden können.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyaminen und ihre Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl, Kohlenhydrate, Stärke, sind verwendbar. Auch Anlagerungsprodukte von Alkylenoxiden an Phenol-Formaldehyd-Harze oder auch an Harnstoff-Formaldehydharze sind erfindungsgemäß einsetztbar.

Vertreter dieser erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32—42 und Seiten 44—54 und Band II, 1964, Seiten 5—6 und 198—199 sowie im Kunststoff-Handbuch, Band VII, Vieweg-Höchtlen, Carl-Hanser-Verlag, München, 1966, z.B. auf den Seiten 45 bis 71, beschrieben.

Ausgangsmaterialien zur Herstellung der Semipräpolymeren sind vorzugsweise die beispielhaft genannten Polyhydroxypolyäther und/oder Polyhydroxypolyester.

Erfindungsgemäß werden leicht flüchtige organische Substanzen als Treibmittel mitverwendet. Als organische Treibmittel kommen z.B. Aceton, Äthylacetat, halogensubstituierte Alkane wie Methylenchlorid, Chloroform, Äthylidenchlorid, Vinylidenchlorid, Monofluortrichlormethan, Chlordifluormethan, Dichlordifluormethan, Trichlor-trifluoräthan, ferner Butan, Hexan, Heptan oder Diäthyläther in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azoisobuttersäurenitril, erzielt werden.

Vorzugsweise werden die beispielhaft genannten "physikalischen" Treibmittel eingesetzt.

Weitere Beispiele für Treibmittel sowie Einzelheiten über die Verwendung von Treibmitteln sind im Kunststoffhandbuch, Band VII, herausgegeben von Vieweg-Höchtlen, Carl-Hanser-Verlag, München 1966, z.B. auf den Seiten 108 und 109, 453 bis 455 und 507 bis 510 beschrieben.

Auch Wasser kann im Prinzip als chemisches Teibmittel mitverwendet werden, obwohl das erfindungsgemäße Verfahren vorzugsweise in Abwesenheit von zugesetztem Wasser durchgeführt wird.

Beim erfindungsgemäßen Verfahren werden als Katalysatoren Kombinationen von organischen Zinnverbindungen mit bestimmten, nachstehend näher beschriebenen, Amidingruppierungen oder Imidazolgruppierungen aufweisenden organischen Verbindungen verwendet. Diese Katalysatoren werden im allgemeinen in einer Menge von 0,001 bis 10 Gew.-%, bezogen auf die den Reaktionspartner für die Semiprepolymeren darstellenden Polyhydroxylverbindungen, diesen Polyhydroxylverbindungen zugesetzt. Vorzugsweise gelangen die einzelnen Katalysatorkomponenten der genannten Kombinationen in Mengen von jeweils 0,2—2,0 Gew.-%, bezogen auf die, den Reaktionspartner für die Semiprepolymeren bildende, Polyolkomponente zum Einsatz. Hierbei werden die einzelnen Katalysatorkomponenten entweder der Polyolkomponente zugemischt oder als komplexe, wie sie in der deutschen Offenlegungsschrift 2 434 185 beschrieben sind, eingesetzt.

Erfindungsgemäß gut geeignete Zinnverbindungen sind z.B. Zinn(II)-Salze von Carbonsäuren wie Zinn(II)-acetat, Zinn(II)-octoat, Zinn(II)äthylhexoat und Zinn(II)-laurat und die Dialkylzinnsalze von Carbonsäuren, wie z.B. Dibutyl-zinn-diacetat.

Geeignete Amidinkatalysatoren sind Verbindungen der Formel (I)

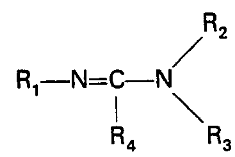

(I)

wobei

$R_1$, $R_2$ und $R_3$ gleiche oder verschiedene Reste bedeuten und für Wasserstoff, ein aliphatischer Kohlenwasserstoffrest mit 1 bis 18, vorzugsweise 1 bis 4 Kohlenstoffatomen, ein aromatischer Kohlenwasserstoffrest mit 6 bis 10 Kohlenstoffatomen, vorzugsweise einen Phenylrest, einen araliphatischen Kohlenwasserstoffrest mit 7 bis 10 Kohlenstoffatomen, vorzugsweise einen Benzylrest oder einen cycloaliphatischen Kohlenwasserstoffrest mit 5 bis 7 Kohlenstoffatomen, vorzugsweise ein Cyclohexylrest stehen und

$R_4$ einen Rest wie $R_1$ oder die Gruppierung $—N(R_2)R_3$ darstellt.

Beispiele für derartige Amidine sind N,N' - Dimethylformamidin, N,N' - Dimethylacet - amidin, Trimethylacetamidin, N,N' - Dimethyl - formamidin, N - Benzyl - N,N' - dimethylacet - amidin, N,N' - Dimethyl - N - äthylbenzamidin, N,N' - Dicyclohexyl - N - methylacetamidin, Tri - phenylbenzamidin, N,N' - Diphenyl - N' - methylbenzylamidin, Tetramethylguanidin, N,N' - Diphenyl - N,N' - dimethylguanidin oder Tetra - phenylguanidin.

Die Darstellung derartiger Amidine ist zusammenfassend mit allgemeinen Arbeitsvorschriften und speziellen Beispielen beschrieben in Houben-Müller-Weyl, Methoden der Organischen Chemie, Band XI, 2, Seite 38 bis 66, Verlag G. Thieme, Stuttgart 1958.

Weitere in Kombination mit den organischen Zinnverbindungen einzusetzende Amidinkatalysatoren sind solche der Formel (II)

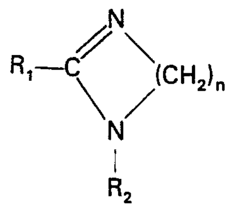

(II)

in welcher

$R_1$ und $R_2$ die genannten Bedeutungen haben und in der

n für eine ganze Zahl von 2 bis 4 steht.

Beispiele für derartige monocyclische Amidine sind 2,3 - Dimethyl - 3,4,5,6 - tetrahydro - pyrimidin, N - Methyl - Δ2 - tetrahydropyrimidin, N - Cyclohexyl - 2 - methyl - Δ2 - tetrahydro - pyrimidin, N - Benzyl - 2 - butyl - Δ2 - tetra - hydropyrimidin, 2 - Methyl - Δ2 - imidazolin, 1,2 - Diphenyl - 2 - imidazolin, 1 - Methyl - Δ4 - 1,2,4 - triazolin und 1,5 - Dibutyl - Δ4 - 1,2,4 - triazolin.

Die Darstellung derartiger cyclischer Amidine ist ebenfalls in Houben-Müller-Weyl, Methoden der Organischen Chemie, Band XI, 2, Seite 38 bis 66 beschrieben.

Weitere beim erfindungsgemäßen Verfahren in Kombination mit den organischen Zinnverbindungen einzusetzende Amidinkatalysatoren sind solche der Formel (III)

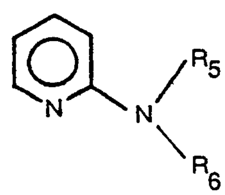

(III)

in welcher

$R_5$ und $R_6$ für gleiche oder verschiedene Reste stehen und Wasserstoff oder einen Alkylrest mit 1 bis 4 Kohlenstoffatomen bedeuten.

Beispiele für derartige Amidine im weiteren Sinne sind α-Aminopyridin, α-Dimethylaminopyridin, α-Dibutylaminopyridin, deren Darstellung z.B. im DRP 489 184 beschreiben wurde.

Die Amidine können ganz oder teilweise durch Imidazolgruppen aufweisende Katalysatoren ersetzt werden. Die hierfür geeigneten Imidazole sind Verbindungen der Formel (IV)

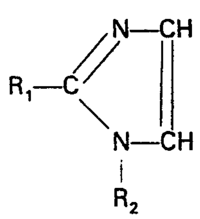

(IV)

in welcher

$R_1$ und $R_2$ die bereits genannte Bedeutung haben.

Beispiele für derartige Imidazole sind N-Methylimidazol, N-Butylimidazol, 2,3-Dimethylimidazol. Die Darstellung derartiger Imidazolderivate wurde z.B. beschrieben von: v. Anwers und Mauss, Ber.dtsch.Chem.Ges. *61*, 2415—2418 (1928).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl Hanser Verlag, München 1966, z.B. auf den Seiten 96 bis 102 beschrieben.

Obwohl es gerade einer der Vorteile des erfindungsgemäßen Verfahrens ist, daß erfindungsgemäß im Vergleich zu den Formschaumstoffen auf Basis von aromatischen Polyisocyanaten des Standes der Technik besonders verfärbungsstabiler Formschaumstoffe zugänglich sind, können beim erfindungsgemäßen Verfahren zur weiteren Erhöhung der Lichtechtheit, insbesondere bei Verwendung von Äthergruppen aufweisenden Polyhydroxylverbindungen, Lichtstabilisatoren mitverwendet werden. Derartige Lichtstabilisatoren werden gegebenenfalls vorzugsweise der Polyolkomponente in Mengen von 0—10 Gew.-%, vorzugsweise 0,5 bis 5, Gew.-% bezogen auf die Polyolkomponente zugemischt. Erfindungsgemäß einsetzbare Lichtstabilisatoren sind z.B.:

I Piperidinderivate

4 - Benzoyloxy-, 4 - Salicyloyloxy-, 4 - Capryloyloxy-, 4 - Stearoyloxy-, 4 - (β - 3,5 - Di - tert. - butyl - 4 - hydroxyphenylpropionyl - oxy)-, 4 - (3,5 - Di - tert. - butyl - 4 - hydroxy - benzoyloxy) - 2,2,6,6 - tetramethylpiperidin. 4 - Benzoyloxy-, 4 - Salicyloxyloxy-, 4 - Stearoyl - oxy- und 4 - tert. - Butylbenzoyloxy - 1,2,2,6,6 - pentamethylpiperidin. Bis - (2,2,6,6 - tetra - methyl - 4 - piperidyl) - sebacat, Bis - (2,2,6,6 - tetramethyl - 4 - piperidyl) - suberat, Bis - (2,2,6,6 - tetramethyl - 4 - piperidyl) - dodecan - dioat, Bis - (1,2,2,6,6 - pentamethyl - 4 - piperidyl) - sebacat. 4 - Capryloyloxy - 1 - propyl - 2,2,6,6 - tetramethylpiperidin. 4 - Capryloyloxy - 1 - allyl - 2,2,6,6 - tetramethyl - piperidin. 4 - Benzoyl - amido-, 4 - Acryloyl - amido- und 4 - Stearoylamido - 2,2,6,6 - tetra - methyl - piperidin. 2,4,6 - Tris - (2,2,6,6 - tetramethyl - 4 - piperidyloxy) - s - triazin, 2,4,6 - Tris - (1,2,2,6,6 - pentamethyl - 4 - piperidyloxy) - s - triazin, 2,4,6 - Tris - (2,2,6,6 - tetramethyl - 4 - piperidylamino) - s - triazin, 2,2,6,6,6 - Tetramethyl - 4 - β - cyanoaethoxy - piperidin, 1,2,2,6,6 - Pentamethyl - 4 - lauroyl - oxy - piperidin, Triacetonaminoxim.

II Benzophenonderivate

2,4 - Dihydroxy-, 2 - Hydroxy - 4 - methoxy-, 2 - Hydroxy - 4 - octoxy-, 2 - Hydroxy - 4 - dodecyloxy-, 2 - Hydroxy - 4 - benzyloxy-, 2 - Hydroxy - 4,4′ - dimethoxy-, 2,4,4′ - Trihydroxy-, 2,2′ - Dihydroxy - 4,4′ - dimethoxy-, 2,2′,4,4′ - Tetrahydroxy-, 2,2′ - Dihydroxy - 4 - methoxy-, 2 - Hydroxy - 2′ - carboxy - 4 -

methoxy-, 2,2' - Dihydroxy - 4 - octoxy- und 2,2' - Dihydroxy - 4 - dodecyloxy - benzo - phenon.

III Benztriazolderivate

2 - (2' - Hydroxy - 5' - methylphenyl)-, 2 - (2' - Hydroxy - 5' - tert. - butylphenyl)-, 2 - (2' - Hydroxy - 5' - tert. - octylphenyl)-, 2 - (2' - Hydroxy - 3' - tert. - butyl - 5' - methylphenyl)-, 2 - (2' - Hydroxy - 3' - tert. - butyl - 5' - methyl - phenyl) - 5 - chlor-, 2 - (2' - Hydroxy - 3',5' - di - tert. - butylphenyl), 2 - (2' - Hydroxy - 3',5' - di - tert. - butylphenyl) - 5 - chlor-, 2 - (2' - Hydroxy - 3',5' - di - tert. - amylphenyl)-, 2 - (2' - Hydroxy - 3',5' - di - tert. - amylphenyl) - 5 - chlor-, 2 - (2' - Hydroxy - 3' - sec. - butyl - 5' - tert. - butylphenyl)-, 2 - (2' - Hydroxy - 3' - tert. - butyl - 5' - sec. - butylphenyl)-, 2 - (2',4' - Dihydroxyphenyl)-, 2 - (2' - Hydroxy - 4' - methoxyphenyl)-, 2 - (2' - Hydroxy - 4' - octoxyphenyl)-, 2 - (2' - Hydroxy - 3' - $\alpha$ - phenyläthyl - 5' - methylphenyl)- und 2 - (2' - Hydroxy - 3' - $\alpha$ - phenyläthyl - 5' - methyl - phenyl) - 5 - chlor - benztriazol.

IV Oxalanilide

2 - Aethyl - 2' - äthoxy-, 2 - Aethyl - 2' - äthoxy - 5' - tert. - butyl-, 2 - Aethyl - 4 - tert. - butyl - 2' - äthoxy - 5' - tert. - butyl-, 2,2' - Dimethoxy-, 2,2' - Diäthoxy-, 4,4' - Dimethoxy-, 4,4' - Diäthoxy-, 2,4' - Dimethoxy-, 2,4' - Di - äthoxy-, 2 - Methoxy - 2' - äthoxy-, 2 - Methoxy - 4' - äthoxy-, 2 - Aethoxy - 4' - methoxy-, 2,2' - Dioctoxy - 5,5' - di - tert. - butyl-, 2,2' - Didodecyloxy - 5,5' - di - tert. - butyl-, 2 - Aethyl - 2' - octoxy-, 4,4' - Dioctoxy-, 2 - Aethyl - 2' - butoxy- und 4 - Methyl - 4' - methoxyoxalanilid.

V Salicylsäurephenylester und -derivate

Salicylsäurephenylester, Salicylsäure - 4 - tert. - butylphenylester, Salicylsäure - 4 - tert. - octylphenylester.

VI Zimtsäureesterderivate

a - Cyano - $\beta$ - methyl - 4 - methoxyzimt - säuremethylester, a - Cyano - $\beta$ - methyl - 4 - methoxyzimtsäurebutylester, a - Cyano - $\beta$ - phenyl - zimtsäureäthylester, a - Cyano - $\beta$ - zimtsäureisooctylester.

VII Malonesterderivate

4 - Methoxy - benzylidenmalonsäuredi - methylester, 4 - Methoxy - benzylidenmalon - säurediäthylester, 4 - Butoxy - benzyliden - malonsäuredimethylester.

Die vorgenannten Lichtstabilisatoren werden bevorzugt einzeln, aber auch in beliebigen Kombinationen gemäß der vorliegenden Erfindung verwendet. Besonders bevorzugt werden Benztriazolderivate eingesetzt, insbesondere das 2 - (2' - Hydroxy - 3',5' - di - tert. - butyl - phenyl) - 5 - chlorbenztriazol.

Erfindungsgemäß können auch oberflächenaktive Zusatzstoffe (Emulgatoren und Schaumstabilisatoren) mitverwendet werden. Als Emulgatoren kommen z.B. die Natriumsalze von Ricinusölsulfonaten oder auch von Fettsäuren oder Salze von Fettsäuren mit Aminen wie ölsaures Diäthylamin oder stearinsaures Diäthanolamin infrage. Auch Alkali- oder Ammoniumsalze von Sulfonsäuren wie etwa von Dodecylbenzolsulfonsäure oder Dinaphthylmethandisulfonsäure oder auch von Fettsäuren wie Ricinolsäure oder von polymeren Fettsäuren können als oberflächenaktive Zusatzstoffe mitverwendet werden.

Als Schaumstabilisatoren kommen vor allem wasserlösliche Polyäthersiloxane infrage. Diese Verbindungen sind im allgemeinen so aufgebaut, daß ein Copolymerisat aus Äthylenoxid und Propylenoxid mit einem Polydimethylsiloxanrest verbunden ist. Derartige Schaumstabilisatoren sind z.B. in der amerikanischen Patentschrift 2.764.565 beschrieben.

Erfindungsgemäß können ferner auch Reaktionsverzögerer, z.B. sauer reagierende Stoffe wie Salzsäure, Schwefelsäure, Phosphorsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chloräthylphosphat oder Ammoniumphosphat und -Polyphosphat, ferner Stabilisatoren gegen Alterungs- und Witterungseinflüsse, Weichmacher und fungistatisch und bakteriostatisch wirkende Substanzen, Füllstoffe wie Bariumsulfat, Kieselgur, Ruß oder Schlämmkreide mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VI, herausgegeben von Vieweg und Höchtlen, Carl-Hanser-Verlag, München 1966, z.B. auf den Seiten 103 bis 113 beschrieben.

Bei der Durchführung des erfindungsgemäßen Verfahrens können auch die an sich bekannten äußeren oder inneren Formtrennmittel verwendet werden, wobei unter "äußeren Formtrennmitteln" insbesondere Wachse oder Metallseifen zu verstehen sind, während als "innere Formtrennmittel" beispielsweise die Formtrennmittel gemäß US—PS 3 726 952, GB—PS 1 365 215, DE—OS 2 356 692, DE—OS 2 363 452, DE—OS 2 404 310, DE—OS 2 427 273, DE—OS 2 431 968 oder GB—PS 1 420 293 verwendet werden können.

Zur Durchführung des erfindungsgemäßen Verfahrens wird im allgemeinen die Polyolkomponente, welche vorzugsweise alle beispielhaft genannten Hilfs- und Zusatzmittel enthält, mit dem Semipräpolymer zur Umsetzung gebracht, wobei man sich oft maschineller Einrichtungen bedient, z.B. solcher, die in der amerikanischen Patentschrift 2 764 565 beschrieben werden. Einzelheiten über Verarbeitungseinrichtungen, die auch erfindungsgemäß in Frage kommen, werden im Kunststoff-Handbuch, Band VI, herausgegeben von Vieweg und Höchtlen, Carl-Hanser-Verlag, München 1966, z.B auf den Seiten 121 bis 205 beschrieben.

Das erfindungsgemäße Verfahren wird in geschlossenen Formen durchgeführt. Dabei wird das Reaktionsgemisch in eine Form eingetragen. Als Formmaterial kommt Metall, z.B. Aluminium oder Kunststoff, z.B. Epoxidharz in Frage. In der Form schäumt das schäumfähige Reaktionsgemisch auf und bildet den Formkörper. Im allgemeinen wird bei der Durchführung des erfindungsgemäßen Verfahrens in die Form eine solche Menge des schäumfähigen Reaktionsgemisches eingetragen, die bei freier Verschäumung zu einem Schaumstoff führen würde, dessen Volumen größer als das Innenvolumen der Form ist und vorzugsweise 120 bis 1000% des Volumens der Form entspricht. In diesem Fall wird unter dem sogenannten "overcharging" gearbeitet; eine derartige Verfahrensweise ist z.B. aus US—PS 3 178 490 oder aus US—PS 3 182 104 bekannt.

Bei der Durchführung des erfindungsgemäßen Verfahrens kommen die Reaktionspartner im übrigen vorzugsweise in solchen Mengen zum Einsatz, die einer "NCO-Kennzahl" von 90—120, vorzugsweise 100—110, entspricht, obwohl auch ein Arbeiten insbesondere oberhalb einer NCO-Kennzahl von 120 beispielsweise bei gleichzeitiger Mitverwendung von Trimerisierungskatalysatoren, beispielsweise von Alkaliacetaten, zwecks Trimerisierung der überschüssigen NCO-Gruppen unter Isocyanuratbildung möglich wäre. Diese letztgenannte Ausführungsform ist jedoch weniger bevorzugt. Unter "NCO-Kennzahl" ist in obigem Zusammenhang das Verhältnis der NCO-Gruppen zu allen im Reaktionsgemisch vorliegenden, gegenüber NCO-Gruppen reaktionsfähigen Gruppen zu verstehen. Eine NCO-Kennzahl von 100 bedeutet in diesem Zusammenhang das Vorliegen äquivalenter Mengen an NCO-Gruppen und gegenüber Isocyanatgruppen reaktionsfähigen Gruppen.

Das erfindungsgemäße Verfahren gestattet die Herstellung von harten Formschaumstoffen mit dichter Außenhaut, zellförmigem Kern und integraler Dichteverteilung, worunter eine kontinuierliche Dichtezunahme vom Formkern nach außen zu verstehen ist, welche sich durch eine gute Witterungsbeständigkeit und hervorragende mechanische Werte, insbesondere eine Formbeständigkeit in der Wärme gemäß DIN 53 432 von mindestens 70°C vorzugsweise mindestens 90°C auszeichnen. Die Frage der Härte der erfindungsgemäßen Verfahrensprodukte ist in erster Linie abhängig von der Funktionalität und der Kettenlänge der beim erfindungsgemäßen Verfahren eingesetzten Ausgangsmaterialien, d.h. vom Verzweigungsgrad dieser Ausgangssubstanzen. So können auch bei Verwendung von schwach verzweigten Ausgangsmaterialien (mittlere NCO- und OH-Funktionalität der Reaktionspartner von wenig über 2,0) beispielsweise durch Verwendung relativ niedermolekularer Polyhydroxylverbindungen harte Schaumstoffe erhalten werden.

Die Verfahrensprodukte können zur Herstellung von Möbelteilen, Karosserieteilen von Fahrzeugen, technischen Geräten und Bauelementen Verwendung finden.

Im folgenden sei das erfindungsgemäße Verfahren beispielhaft beschrieben. In den Beispielen 1—6 wurde eine Aluminiumform der Maße 10 x 600 x 1000 mm eingesetzt, deren Innenwände mit einem äußeren Formtrennmittel auf Silikon-Basis vorbehandelt worden sind. Bei freier Verschäumung würden in den Beispielen 1—6 Schaumstoffe einer Dichte von ca. 70—200 g/cm³ entstehen.

Beispiel 1

100 Gew.-Teile eines Polyolgemisches der OH-Zahl 946 und einer Viskosität bei 25°C von 4300 mPa.s, bestehend aus 95 Gew.-Teilen eines Polyäthers der OH-Zahl 900, der durch Addition von Propylenoxid an Trimethylolpropan erhalten wurde, und 5 Gew.-Teilen Äthylenglykol, 3 Gew.-Teilen eines Polysiloxan-Polyalkylenoxid-Blockcopolymerisats als Schaumstabilisator, 1 Gew.-Teil 1-Cyclohexyl-2-methyltetrahydropyrimidin und 0,5 Gew.-Teile Dibutylzinn(IV)dilaurat als Katalysatorenpaar und 10 Gew.-Teile Monofluortrichlormethan als Treibmittel wurden zu einer Polyolkomponente vereinigt.

Als Polyisocyanatkomponente dienten 277 Gew.-Teile eines Semipräpolymeren, das erhalten wurde durch Umsetzung von 7,74 Mol eines Polyätherpolyols, gebildet aus Trimethylolpropan und Propylenoxid, OH-Zahl 378 und 1,47 Mol eines Polyesters, gebildet aus Rizinusöl und Cyclohexanonformaldehydkondensat, OHZ 165, mit 121,9 Mol 1 - Isocyanato - 3,3,5 - trimethyl - 5 - iso - cyanatomethyl - cyclohexan Isophorondiiso - cyanat), das einen Gesamt-NCO-Gehalt von 28,2% und eine Viskosität von mPa.s/25°C aufweist.

Die Reaktionskomponenten werden mit Hilfe eines Zweikomponentendosiermischgerätes vermischt und in eine geschlossene, auf 90°C temperierte Metallform eingetragen, in der das Gemisch aufschäumt und unter Verdichtung erstarrt. Reaktionszeiten des Schaumgemisches: Startzeit = 15 sec, Abbindezeit = 30 sec. Nach 5 Minuten wird das Formteil der Form entnommen. Das Formteil hat eine Gesamtrohdichte von 0,6 g/cm³ und eine allseitig geschlossene, kompakte Haut. Die Formteildicke beträgt 10 mm.

Das Formteil wird im Weather-o-meter-Test 1000 Stunden bewittert. Nach dieser Zeit wird mit Hilfe der Gardner-Glanzmethode (DIN 67 530, Glanzwinkel 60°) der Restglanz der Prüfkörper bestimmt. Der Restglanz beträgt 100%. Die Farbabweichung der bewitterten Probe im Vergleich zur O-Probe, ermittelt mit dem Graumaßstab DIN 54 001 und SNV 195805 beträgt 4, d.h., es ist nur eine geringe Farbabweichung zu er kennen. Die Formbeständigkeit in de Wärme gemäß DIN 53 432 beträgt 94°C.

Beispiel 2

100 Gew.-Teile eines Polyolgemisches der OH-Zahl 946 und einer Viskosität bei 25°C von 4300 mPa.s, bestehend aus 95 Gew.-Teilen eines Polyäthers der OH-Zahl 900, der durch Addition von Propylenoxid an Trimethylolpropan erhalten wurde, und 5 Gew.-Teilen Äthylenglykol, 3 Gew.-Teilen eines Polysiloxan - Polyalkylenoxid - Blockcopolymerisats als Schaumstabilisator, 1 Gew.-Teil 1 - Cyclohexyl - 2 - methyltetrahydropyrimidin und 0,5 Gew.-Teile Dibutylzinn(IV)-dilaurat als Katalysatorenpaar, 2 Gew.-Teile 2 - (2' - Hydroxy - 3',5' - di - tert. - butyl - phenyl) - 5 - chlor - benzotriazol als UV-Stabilisator und 10 Gew.-Teile Monofluortrichlormethan werden zu einer Polyolkomponente vereinigt.

Als Polyisocyanatkomponente dienen 277 Gew.-Teile eines Semipräpolymeren, das erhalten wurde durch Umsetzung von 7,74 Mol eines Polyols, gebildet aus Trimethylolpropan und Propylenoxid, OH-Zahl 378 und 1,47 Mol eines Polyesters, gebildet aus Rizinusöl und Cyclohexanonformaldehydkondensat, OHZ 165, mit 121,9 Mol Isophorondiisocyanat, das einen Gesamt-NCO-Gehalt von 28,2% und eine Viskosität von 120 mPa.s/25°C aufweist.

Die Reaktionskomponenten werden, wie in Beispiel 1 beschrieben, mit Hilfe eines Zweikomponentendosiermischgerätes vermischt und in einer geschlossenen, auf 90°C temperierten Metallform zu einem Formteil aufgeschäumt. Reaktionszeiten: Startzeit = 15 sec, Abbindezeit = 29 sec.

Das Formteil wird im Weather-o-meter-Test 1000 Stunden bewittert. Nach dieser Zeit wird mit Hilfe der Gardner-Glanzmethode (DIN 67 530, Glanzwinkel 60°) der Restglanz der Prüfkörper bestimmt. Der Restglanz beträgt 100%. Die Farbabweichung der bewitterten Probe im Vergleich zur O-Probe, ermittelt mit dem Graumaßstab DIN 54 001 und SNV 195805 beträgt 5, d.h., es ist keine Farbabweichung zu erkennen. Die Formbeständigkeit in der Wärme gemäß DIN 53 432 beträgt 94°C.

Beispiel 3

100 Gew.-Teile eines Polyolgemisches der OH-Zahl 588 mit einer Viskosität von $\eta_{25}$ = 4300 mPa.s bestehend aus 36 Gew.-Teilen eines Polyäthers der OH-Zah 900, der erhalten wurde durch Anlagerung von Propylenoxid und Äthylenoxid an Trimethylolpropan, 4 Gew.-Teilen eines Polyäthers der OH-Zahl 650, der erhalten wurde durch Anlagerung von Propylenoxid an Trimethylolpropan, und 61 Gew.-Teile eines Polyäthers der OH-Zahl 900, der erhlaten wurde durch Anlagerung von Propylenoxid an Trimethylolpropan, 3 Gew.-Teilen eines Polysiloxan - Polyalkylenoxid - Blockcopolymerisats als Schaumstabilisator, 0,6 Gew.-Teile 1-Cyclohexyl - 2 - methyl - tetrahydropyrimidin und 0,15 Gew.-Teilen eines 1:1-Adduktes aus 1 - Methyl - 2 - methyl - tetrahydropyrimidin und Dibutyl - zinn(IV)-dilaurat als Aktivator und 10 Gew.-Teile Monofluortrichlormethan als Treibmittel wurden zu einer Polyolkomponente vereinigt.

Als Polyisocyanatkomponente dienten 168 Gew.-Teile eines Semipräpolymeren mit einem NCO-Gehalt von 29% und einer Viskosität von $\eta_{25}$ = 468 mPa.s, das hergestellt wurde durch Prepolymerisierung von Isophorondiisocyanat mit einem Polyester, der aufgebaut wurde aus Adipinsäure, Phthalsäureanhydrid und Maleinsäureanhydrid, im Molverhältnis 46:10:1, sowie 1,2-Propandiol und Trimethylolpropan im Molverhältnis 22:21 (OH-Zahl 285, Viskosität $\eta_{25}$ = 2200 mPa.s).

Die Reaktionskomponenten werden, wie in Beispiel 1 beschrieben, mit Hilfe eines Zweikomponentendosiermischgerätes vermischt und in eine geschlossene, auf 90°C temperierte Metallform eingetragen. Reaktionszeiten: Startzeit = 14 sec, Abbindezeit = 28 sec. Nach 5 Minuten wird das Formteil der Form entnommen. Das Formteil hat eine Gesamtrohdichte von 0,6 g:cm$^3$ und eine allseitig geschlossene, kompakte Haut.

Das Formteil wird im Weather-o-meter-Test 1000 Stunden bewittert. Nach dieser Zeit wird mit Hilfe der Gardner-Glanz-methode (DIN 67 530, Glanzwinkel 60°C) der Restglanz der Prüfkörper bestimmt. Der Restglanz beträgt 100%. Die Farbabweichung der bewitterten Probe im Vergleich zur O-Probe, ermittelt mit dem Graumaßstab DIN 54 001 und SNV 195805 beträgt 4, d.h., es ist nur eine geringe Farbabweichung zu erkennen. Die Formbeständigkeit in der Wärme gemäß DIN 53 432 beträgt 107°C.

Beispiel 4 (Vergleichsbeispiel)

100 Gew.-Teile eines Polyolgemisches der OH-Zahl 946 und einer Viskosität bei 25°C von 4300 mPa.s, bestehend aus 95 Gew.-Teilen eines Polyäthers der OH-Zahl 900, der durch Addition von Propylenoxid an Trimethylolpropan erhalten wurde, und 5 Gew.-Teilen Äthylenglykol, 3 Gew.-Teilen eines Polysiloxan - Polyalkylenoxid - Blockcopolymerisats als Schaumstabilisator, 0,6 Gew.-Teile 1 - Cyclohexyl - 2 - methyl - tetrahydropyrimidin, 0,5 Gew.-Teile einer 1:1-Mischung aus 1 - Cyclohexyl - 2 - methyl - tetrahydropyrimidin und Dibutylzinn(IV) - dilaurat als Katalysator und 100 Gew.-Teilen Monofluortrichlormethan werden zu einer Polyolkomponente vereinigt.

Als Polyisocyanatkomponent dienten 291 Gew.-Teile eines Semipräpolymeren mit einem NCO-Gehalt von 26,5% und einer Viskosität von $\eta_{25} = 2200$ mPa.s, das gebildet wird durch Biuretisierung von 1,6-Hexamethylendiisocyanat.

Die Reaktionskomponenten werden, wie in Beispiel 1 beschrieben, mit Hilfe eines Zweikomponentendosiermischgerätes vermischt und in eine geschlossene, auf 90°C temperierte Metallform eingetragen, in der das Gemisch aufschäumt und unter Verdichtung erstarrt. Reaktionszeiten: Startzeit = 15 sec, Abbindezeit = 22 sec. Nach 5 Minuten wird das Formteil der Form entnommen. Das Formteil hat eine Gesamtrohdichte von 0,6 g/cm³ und eine allseitig geschlossene kompakte Haut. Die Formteilstärke beträgt 10 mm.

Das Formteil wird im Weather-o-meter-Test 1000 Stunden bewittert. Nach dieser Zeit wird mit Hilfe der Gardnder-Glanzmethode (DIN 67 530, Glanzwinkel 60°C) der Restglanz der Prüfkörper bestimmt. Der Restglanz beträgt 100%. Die Farbabweichung der bewitterten Probe im Vergleich zu O-Probe, ermittelt mit dem Graumaßstab DIN 54 001 und SNV 295805 beträgt 3. Die Formbeständigkeit in der Wärme gemäß DIN 53 432 beträgt 67°C.

Beispiel 5

100 Gew.-Teile eines Polyolgemisches der OH-Zahl 599 und einer Viskosität von 2700 mPa.s/25°C bestehend zu 65% aus einem Polyäther der OH-Zahl 900, der durch Addition von Propylenoxid an Trimethylolpropan erhalten wurde, und zu 35% aus einem Polyätherpolyol der OH-Zahl 42, welches durch Propoxylierung eines Gemisches aus 84 Gew.-% Trimethylolpropan und 16 Gew.-% 1,2-Propandiol erhalten wurde, 3 Gew.-Teilen eines Polysiloxan - Polyalkylenoxid - Blockcopolymerisates als Schaumstabilisator, 1 Gew.-Teil 1 - Cyclohexyl - 2 - methyl - tetrahydropyrimidin und 0,5 Gew.-Teile Dibutylzinn(IV)-dilaurat als Katalysator und 15 Gew.-Teile Monofluortrichlormethan werden zu einer Polyolkomponente vermischt.

Als Isocyanatkomponenten dienten 164 Gew.-Teile eines Semipräpolymeren mit einem NCO-Gehalt von 30,2 Gew.-% und einer Viskosität von 230 mPa.s/25°C, welches durch Umsetzung von Isophorondiisocyanat mit unterschüssigen Mengen des Polyhydroxypolyesters aus Beispiel 3 erhalten worden war. Die Reaktionskomponenten werden mit Hilfe eines Zweikomponentendosiermischgerätes vermischt und in eine geschlossene, auf 90°C temperierte Metallform eingetragen, in der das Gemisch aufschäumt und unter Verdichtung erstarrt. Reaktionszeiten des Schaumgemisches: Startzeit = 15 sec, Abbindezeit = 30 sec. Nach 5 Minuten wird das Formteil der Form entnommen. Das Formteil hat eine Gesamtrohdichte von 0,6 g/cm³ und eine allseitig geschlossene, kompakte Haut. Die Formteildicke beträgt 10 mm.

Das Formteil wird im Weather-o-meter-Test 1000 Stunden bewittert. Nach dieser Zeit wird mit Hilfe der Gardner-Glanzmethode (DIN 67 530, Glanzwinkel 60°) der Restglanz der Prüfkörper bestimmt. Der Restglanz beträgt 100%. Die Farbabweichung der bewitterten Probe im Vergleich zur O-Probe, ermittelt mit dem Graumaßstab DIN 54 001 und SNV 195805 beträgt 4, d.h., es ist nur eine geringe Farbabweichung zu erkennen.

Das erhaltene Formteil mit der Raumdichte 0,6 g/cm³ hat eine Biegefestigkeit gemäß DIN 53 432 von 40 mPa.s, eine Durchbiegung gemäß DIN 53 432 von 13 mm, einen E-Modul gemäß DIN 53 432 von 990 mPa.s, eine Bruchdehnung gemäß DIN 53 432 von eine 8%, eine Formbeständigkeit in der Wärme gemäß DIN 53 432 von 104°C, sowie eine Schlagzähigkeit gemäß DIN 53 432 von 16 Joule/m².

Beispiel 6

100 Gew.-Teile eines Polyolgemischs der OH-Zahl 620 bestehend aus 65 Gew.-Teilen des in Beispiel 1 genannten Polyäthers der OH-Zahl 900 und 35 Gew.-Teilen des in Beispiel 5 genannten Polyäthers der OH-Zahl 42, 3 Gew.-Teile eines Polysiloxan - Polyalkylenoxid - Blockcopolymerisats als Schaumstabilisator, 0,6 Gew.-Teile 1 - Cyclohexyl - 2 - methyl - tetrahydropyrimidin und 0,5 Gew.-Teile einer 1:1-Mischung aus 1 - Cyclohexyl - 2 - methyl - tetrahydropyrimidin und Dibutylzinn(IV)-dilaurat als Katalysatorengemisch und 15 Gew.-Teile Monofluortrichlormethan werden zu einer Polyolkomponente vereinigt.

Als Polyisocyanatkomponente dienten 152 Gew.-Teile eines Polyisocyanatgemischs bestehend aus gleichen Gew.-Teilen des in Beispiel 5 genannten Semipräpolymeren und 4,4'-diisocyanatodicyclohexylmethan.

Die Reaktionskomponenten werden mit Hilfe eines Zweikomponentendosiermischgeräts vermischt und in ein geschlossenes, auf 70°C temperiertes Metallwerkzeug eingetragen, in der das Gemisch aufschäumt und erstarrt. Die Startzeit beträgt 15 sec, die Abbindezeit 25 sec. Das Formteil besitzt eine Dicke von 10 mm und eine Rohdichte von 0,6 g/cm³ bei allseitig geschlossener kompakter Haut einen Wärmestand nach DIN 53 432 von 102°C.

**Patentansprüche**

1. Verfahren zur Herstellung von Formschaumstoffen auf Polyurethanbasis mit kompakter Oberfläche, zelligem Kern und integraler Dichteverteilung über dem Querschnitt der Formkörper durch Aufschäumen eines schaumfähigen Reaktionsgemisches aus

a) Polyisocyanaten mit einem NCO-Gehalt von 24—32 Gew.-% und einer Viskosität von 80—5000 mPa.s/25°C, die Umsetzungsprodukte von mindestens eine cycloaliphatisch gebundene Isocyanatgruppe und höchstens eine aliphatisch gebundene Isocyanatgruppe aufweisenden (cyclo)-aliphatischen Diisocyanaten des Molekulargewichtsbereichs 166—300 mit unterschüssigen Mengen an organischen Polyhydroxylverbindungen darstellen,

b) Polyhydroxylverbindungen einer (mittleren) OH-Funktionalität von 2,1 bis 5,

c) Aktivatoren und

d) Treibmitteln, sowie gegebenenfalls weiteren mit Isocyanaten reagierenden Verbindungen und weiteren Hilfsmitteln in einer geschlossenen Form unter den Bedingungen der Formverschäumung, dadurch gekennzeichnet, daß man als Aktivatoren c) Kombinationen von Amidingruppierungen oder Imidazolgruppierungen aufweisenden organischen Verbindungen, ausgewählt aus der Gruppe bestehend aus (i) Verbindungen der Formel

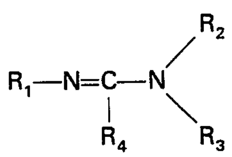

wobei

$R_1$, $R_2$ und $R_3$ gleiche oder verschiedene Reste bedeuten und für Wasserstoff, ein aliphatischer Kohlenwasserstoffrest mit 1 bis 18, vorzugsweise 1 bis 4 Kohlenstoffatomen, ein aromatischer Kohlenwasserstoffrest mit 6 bis 10 Kohlenstoffatomen, vorzugsweise einen Phenylrest, einen araliphatischen Kohlenwasserstoffrest mit 7 bis 10 Kohlenstoffatomen, vorzugsweise einen Benzylrest oder einen cycloaliphatischen Kohlenwasserstoffrest mit 5 bis 7 Kohlenstoffatomen, vorzugsweise ein Cyclohexylrest stehen und

$R_4$ einen Rest wie $R_1$ oder die Gruppierung $—N(R_2)R_3$ darstellt,

(ii) Verbindungen der Formel

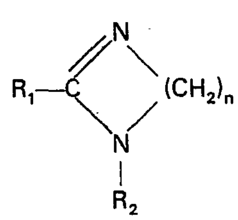

in welcher

$R_1$ und $R_2$ die genannten Bedeutungen haben und in der

n für eine ganze Zahl von 2 bis 4 steht,

(iii) Verbindungen der Formel

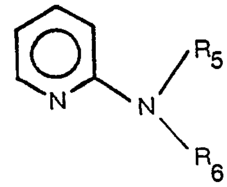

in welcher

$R_5$ und $R_6$ für gleiche oder verschiedene Reste stehen und Wasserstoff oder einen Alkylrest mit 1 bis 4 Kohlenstoffatomen bedeuten und

(iv) Verbindungen der Formel

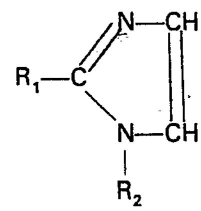

in welcher

$R_1$ und $R_2$ die bereits genannte Bedeutung haben mit organischen Zinnverbindungen verwendet.

2. Verfahren gemäß Anspruch 1, dadurch gekennzeichnet, daß man als Polyisocyanat a) ein Umsetzungsprodukt von 1 - Isocyanato - 3,3,5 - trimethyl - 5 - isocyanatomethyl - cyclohexan mit unterschüssigen Mengen an organischen Polyhydroxylverbindungen verwendet, welches einen NCO-Gehalt von 24 bis 32 Gew.-% und eine Viskosität von 100 bis 2500 mPa.s/25°C aufweist.

**Revendications**

1. Procédé de production de mousses à mouler à base de polyuréthanne à surface compacte, à noyau cellulaire et à répartition intégrale de densité sur la section transversale de la pièce moulée, par moussage d'un mélange réactionnel apte à mousser, composé

a) de polyisocyanates ayant une teneur en NCO de 24 à 32% en poids et une viscosité de 80 à 5000 mPa.s/25°C, qui représentent les produits de réaction de diisocyanates (cyclo)-aliphatiques à plage de poids moléculaire de 166—300, présentant au moins un groupe isocyanate en liaison cycloaliphatique et au maximum un groupe isocyanate en liaison aliphatique, avec des quantités insuffisantes de composés polyhydroxyliques organiques,

b) de composés polyhydroxyliques ayant une fonctionnalité OH (moyenne) de 2,1 à 5,

c) d'activateurs et

d) de porogènes, ainsi que, le cas échéant, d'autres composés réagissant avec des isocyanates et d'autres adjuvants dans un moule fermé dans les conditions du moussage en moule, caractérisé en ce qu'on utilise comme activateurs c) des mélanges de

composés organiques porteurs de groupements amidine ou de groupements imidazole, choisis dans le groupe comprenant (i) des composés de formule

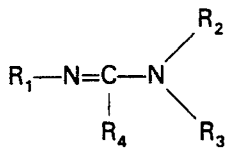

dans laquelle

$R_1$, $R_2$ et $R_3$ sont des restes égaux ou différents et représentent l'hydrogène, un reste d'hydrocarbure aliphatique ayant 1 à 18, de préférence 1 à 4, atomes de carbone, un reste d'hydrocarbure aromatique ayant 6 à 10 atomes de carbone, de préférence un reste phényle, un reste d'hydrocarbure araliphatique ayant 7 à 10 atomes de carbone, de préférence un reste benzyle, ou un reste d'hydrocarbure cycloaliphatique ayant 5 à 7 atomes de carbone, de préférence un reste cyclohexyle et

$R_4$ est un reste tel que $R_1$ ou le groupement $-N(R_2)R_3$,

(ii) des composés de formule

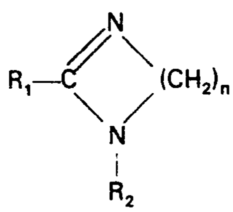

dans laquelle

$R_1$ et $R_2$ ont les définitions mentionnées et *n* est un nombre entier de 2 à 4,

(iii) des composés de formule

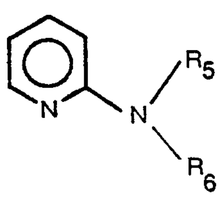

dans laquelle

$R_5$ et $R_6$ sont des restes égaux ou différents et représentent l'hydrogène ou un reste alkyle ayant 1 à 4 atomes de carbone et

(iv) des composés de formule

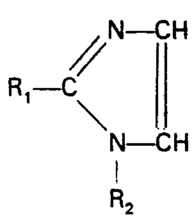

dans laquelle

$R_1$ et $R_2$ ont la définition déjà mentionnée avec des composés organiques de l'étain.

2. Procédé suivant la revendication 1, caractérisé en ce qu'on utilise comme polyisocyanate a) un produit de réaction du 1 - isocyanato - 3,3,5 - triméthyl - 5 - isocyanatométhylcyclohexane avec des quantités insuffisantes de composés polyhydroxyliques organiques, qui présente une teneur en NCO de 24 à 32% en poids et qui a une viscosité de 100 à 2500 mPa.s/25°C.

## Claims

1. Process for the production of moulded foams based on polyurethane and having a compact surface, a cellular core and an integral density distribution throughout the cross-section of the mouldings, by foaming a foamable reaction mixture of

a) polyisocyanates having an NCO content of 24—32% by weight and a viscosity of 80—5000 mPa.s/25°C, which are reaction products of (cyclo)aliphatic diisocyanates containing at least one cycloaliphatically bound isocyanate group and at most one aliphatically bound isocyanate group and having a molecular weight in the range from 166—300 with substoichiometric quantities of organic polyhydroxyl compounds,

b) polyhydroxyl compounds having an (average) OH functionality of 2.1 to 5,

c) activators and

d) blowing agents, as well as, optionally, other isocyanate-reactive compounds and other auxiliaries

in a closed mould under in-mould foaming conditions, characterized in that the activators c) used are combinations of organic compounds containing amidine groups or imidazole groups, selected from the group consisting of

(i) compounds of the formula

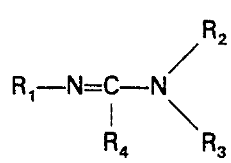

wherein

$R_1$, $R_2$ and $R_3$ denote identical or different radicals and represent hydrogen, an aliphatic hydrocarbon radical with 1 to 18, preferably 1 to 4 carbon atoms, an aromatic hydrocarbon radical with 6 to 10 carbon atoms, preferably a phenyl radical, an araliphatic hydrocarbon radical with 7 to 10 carbon atoms, preferably a benzyl radical or a cycloaliphatic hydrocarbon radical with 5 to 7 carbon atoms, preferably a cyclohexyl radical and

$R_4$ represents a radical like $R_1$ or the group $-N(R_2)R_3$,

(ii) compounds of the formula

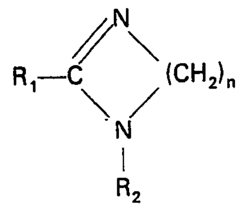

in which

$R_1$ and $R_2$ have the indicated meanings and in which

n represents an integer from 2 to 4,

(iii) compounds of the formula

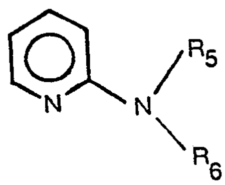

in which

$R^5$ and $R^6$ represent identical or different radicals and denote hydrogen or an alkyl radical with 1 to 4 carbon atoms and

(iv) compounds of the formula

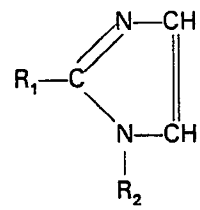

in which

$R_1$ and $R_2$ have the meaning already indicated with organic tin compounds.

2. Process according to Claim 1, characterised in that the polyisocyanate a) used is a reaction product of 1 - isocyanato - 3,3,5 - trimethyl - 5 - isocyanatomethyl cyclohexane with sub-stoichiometric quantities of organic polyhydroxyl compounds, which has an NCO-content of 24 to 32% by weight and a viscosity of 100 to 2500 mPa.s/25°C.